# EUROPEAN PATENT SPECIFICATION

(11) **EP 1 057 290 B1**
(45) Date of publication and mention of the grant of the patent: **08.01.2003**
(21) Application number: 99910951.5
(22) Date of filing: 10.02.1999
(51) Int. Cl.: H04B 10/135, G02B 6/34

(54) **MULTIPLEXER AND DEMULTIPLEXER FOR SINGLE MODE OPTICAL FIBER COMMUNICATION LINKS**
MULTIPLEXER UND DEMULTIPLEXER FÜR NACHRICHTENVERBINDUNGEN MIT MONOMODIGEN OPTISCHEN FASERN
MULTIPLEXEUR ET DEMULTIPLEXEUR POUR LIAISONS DE COMMUNICATION A FIBRES OPTIQUES MONOMODES

(30) Priority: 13.02.1998 US 23258
(43) Date of publication of application: 06.12.2000
(73) Proprietor: APA OPTICS, INC., Blaine, MN 55449 (US)
(72) Inventor: BOORD, Warren, Timothy, Brooklyn Park, MN 55443 (US); JAIN, Anil, K., North Oaks, MN 55127 (US)
(74) Representative: Belcher, Simon James
(86) International application number: US9902766
(87) International publication number: WO99041858

(56) References cited:
- EP-A- 0 859 249
- WO-A-93/21548
- DE-A- 3 149 615
- US-A- 5 026 131
- PATENT ABSTRACTS OF JAPAN vol. 011, no. 276 (P-613), 8 September 1987 & JP 62 075406 A (FUJITSU LTD), 7 April 1987

## Description

### Field of the Invention

This invention relates generally to an optic device and more particularly to an optical multiplexer and demultiplexer for dense wavelength division multiplexed ("DWDM") fiber optic communication systems.

### Background

The impact of advances in photonics technology in the area of communication systems has been dramatic. By way of example, new communication system architectures have been proposed based on such photonics technology. These communication architectures take advantage of the ability of optical fibers to carry very large amounts of information -- with very little marginal cost once the optical fiber is in place.

Photonics communication system architectures based on optical wavelength division multiplexing (WDM) or optical frequency division multiplexing (coherent techniques) to increase the information carrying potential of the optical fiber systems are being developed. For WDM systems, a plurality of lasers are used with each laser emitting a different wavelength. In these types of systems, devices for multiplexing and demultiplexing the optical signals into or out of a single optical fiber are required. Early WDM systems used a wide wavelength spacing between channels. For example, the bandwidth of a λ = 1310 nm link was increased by adding a 1550 nm channel. Fiber optic directional coupler technology was used to multiplex such widely spaced wavelength channels. Since optical fiber system performance is best when optimized for use at a single wavelength window. optimum WDM systems use several closely spaced wavelengths within a particular wavelength window. Currently, the telecommunications industry is working towards the deployment of dense wavelength division multiplexed (DWDM) systems with up to 32 channels in the 1530 to 1565 nm wavelength window -- with adjacent channels separated in wavelength by 8 angstroms (100 GHz optical frequency spacing). Future developments envision channel wavelength separations of 4 angstroms (50 GHz optical frequency spacing).

Several technologies are being developed to provide for DWDM. These include micro-optical devices, integrated optic devices, and fiber optic devices. Micro-optical devices use optical interference filters and diffraction gratings to combine and separate different wavelengths. Integrated optic devices utilize optical waveguides of different lengths to introduce phase differences so that optical interference effects can be used to spatially separate different wavelengths. Fiber optic devices utilize Bragg gratings fabricated within the light guiding regions of the fiber to reflect narrow wavelength bands.

Micro-optical devices utilizing diffraction devices have been proposed in the literature *(See. e.g.,* W.J. Tomlinson, Applied Optics, vol. 16, no. 8, pp. 2180-2194, 1977; J. *P.* Laude, *Technical Digest of the Third Integrated Optics and Optical Fiber Communication Conference*, San Francisco, 198 1, pp.-66-67; R. Watanabe et. al., Electronics Letters, vol.16, no. 3, pp. 106-107, 1980; Y. Fujii et. al., Applied Optics, vol. 22, no. 7, pp. 974-978, 1983). These references describe generally how diffraction gratings can be used for WDM. However, to meet the needs of DWDM fiber optic communication systems, high performance is required with respect to parameters such as polarization dependent loss, cross talk, return loss, and insertion loss. In order to meet the specifications for these DVVDM performance parameters, the incorporation of additional optical elements to effectively use the wavelength multiplexing and demultiplexing capabilities possible with diffraction gratings is required.

US patent no 5026131 describes a wavelength division mulitplexer device. Light waves enter and exit the device in optical fibers. The device includes a holographic dispersion grating and a Fourier transform lens. The dispersion grating and lens are mounted with paraxial alignment with the dispersion grating at Littrow configuration and the optical axis extends through an input optical fibre grouping, lens and grating. In a demulitplexer embodiment, the input fiber lies in a vertical plane extending through the optical axis, and the output fibers are symmetrically spaced maximally close to the optical axis.

DE-A-3149615 generally describes a wavelength multiplexing system which includes a polarizing device.

Therefore, there arises a need for a high performance optical apparatus and method for use in a DWDM system. The present invention directly addresses and overcomes the shortcomings of the prior art by providing DWDM with low polarization dependent loss (<0.5 dB), low insertion loss with single mode fiber optic systems (<5 dB), low cross talk between wavelength channels (<35 dB for 100 GHz channel separation and <30 dB for 50 GHz channel separation), and low return loss (<55 dB).

### Summary

The present invention provides for an optical multiplexer and demultiplexer for dense wavelength division multiplexed ("DWDM") fiber optic communication systems. In one preferred embodiment of the present invention, a device may be constructed in accordance with the principles of the present invention as a multiplexer. This device functions to spatially combine the optical signals from several laser sources (each of which is a different wavelength) and launch the spatially combined laser beams into a single optical fiber. In a second preferred embodiment of the present invention, a device may be constructed in accordance with the principles of the present invention as a demultiplexer. Here the device functions to spatially separate the different wavelengths of a wavelength division multiplexed optical link and launch each of the different wavelengths into a different optical fiber.

In the preferred embodiments described herein, the device includes both bulk optic and integrated optic components. The spatial separation or spatial combination of laser beams of different wavelength is achieved with the use of bulk diffraction gratings. Also, bulk optical components are used to collimate and shape the free space propagating laser beams to enable efficient coupling of light into single mode optical fibers, or integrated optic waveguides, and to reduce optical cross talk. Polarizing beamsplitters orient the polarization direction of the light to enable maximum diffraction efficiency by the gratings and to reduce the polarization dependent loss.

Another feature of the present invention is that the end faces of optical fibers and integrated optic waveguides are angle polished to reduce back reflection and thereby reduce noise caused by feedback to the laser source. Preferably, the diffraction grating and focusing optics are specified to permit multiplexing and demultiplexing of laser wavelengths separated by 0.4 nanometers (nm) in the 1550 nm wavelength band. The preferred field of view of the optics permit multiplexing and demultiplexing of up to 32 wavelength channels separated by 0.4 nanometers in the 1550 nm wavelength band. Although examples of performance are provided for the 1550 nm optical wavelength band, the device components can be designed for use at other wavelength bands, e.g., the optical fiber low absorption loss band at λ ∼ 1310nm.

Therefore, according to one aspect of the invention, there is provided an optical fiber transmission apparatus, the apparatus comprising: a plurality of laser sources for generating optical beams; a first optical transmission fiber; multiplexer means for spatially combining the optical beams from the laser sources, each of which is a different wavelength, and launching the spatially combined optical beams into the optical transmission fiber to form a wavelength division multiplexed optical signal, wherein the multiplexer means includes: a diffraction grating; means for shaping the optical beams; and means for adjusting the polarization direction of the optical beams, whereby the diffraction grating efficiency is improved and the polarization dependent loss is minimized; a plurality of second optical fibers; demultiplexer means for spatially separating the different wavelengths from the optical transmission fiber and launching each of the different wavelengths into separate second optical fibers, wherein the demultiplexer means includes: a diffraction grating; means for shaping the optical beams; and means for adjusting the polarization direction of the optical beams, whereby the diffraction grating efficiency is improved and the polarization dependent loss is minimized; and wherein the means for launching each of the different wavelengths into the plurality of second optical fibers is an integrated optic fanout circuit having a plurality of coupling ports arranged and configured to improve the optical channel wavelength bandwidth of the apparatus.

According to another aspect of the invention, there is provided a bi-directional optical apparatus, of the type which is used in connection with optical beams generated by a plurality of laser sources and which is carried by optical fibers, the apparatus comprising: a diffraction grating; means for shaping the optical beams; means for adjusting the polarization direction of the optical beams, whereby the diffraction grating efficiency is improved and the polarization dependent loss is minimized; and an integrated optic fanout circuit having a plurality of coupling ports arranged and configured to increase the optical channel wavelength bandwidth.

According to a further aspect of the invention, there is provided a bidirectional optical apparatus, of the type which is used in connection with optical signals generated by a plurality of laser sources and which is carried by optical fibers, the apparatus comprising: an optical fiber; multiplexer means for spatially combining the optical signals from several laser sources, each of which is a different wavelength, and launching the spatially combined optical signals into a single optical fiber via an integrated optic fanout circuit having a plurality of coupling ports to form a wavelength division multiplexed optical signal; and demultiplexer means for spatially separating the different wavelengths from the single optical fiber carrying wavelength division multiplexed optical signals and launching each of the different wavelengths into a separate optical fiber, wherein the multiplexer and demultiplexer means are comprised of identical components.

According to a further aspect of the invention, there is provided a bidirectional optical device comprising: a diffraction grating; means for shaping the optical beams; and means for adjusting the polarization direction of the optical beams, whereby the diffraction grating efficiency is improved and the polarization dependent loss is minimized, wherein the apparatus may be used as both: a multiplexer to spatially combine the optical beams from several laser sources, each of which is a different wavelength and launch the spatially combined laser beams into a single optical fiber; and a demultiplexer to spatially separate the different wavelengths of a wavelength division multiplexed optical link and launch each of the different wavelengths into a different optical fiber via an integrated optic fan out circuit having a plurality of coupling ports.

According to a further aspect of the invention, there is provided a method of demultiplexing a plurality of light signals carried by an optical fiber comprising the steps of: collimating the light exiting an optical fiber end face; splitting the plurality of optical wavelength signals into two beams; rotating the polarization of either the p polarized or s polarized beam; expanding the diameter of the collimated beams in the direction of the polarization; diffracting each of the different wavelength beams into a different angular direction relative to a defined direction; reducing the expanded diameter of the collimated beams in the direction of the polarization; recombining the two optical beams at each wavelength into a single beam for each wavelength signal, and wherein the recombined beam for each wavelength has two mutually perpendicular polarization components and is propagating in a different angular direction relative to an optic axis; focusing the optical wavelength signals to a different spatial location along a line in the focal plane of the focusing means; and receiving the focused signals and launching the individual signals into separate optical fibers via an integrated optic fanout circuit having a plurality of coupling parts.

One of the features of the present invention, is that it comprises a bi-directional device which can be used as both a multiplexer to spatially combine the optical signals from several laser sources, each of which is a different wavelength, and launch the spatially combined laser beams into a single optical fiber and as a demultiplexer to spatially separate the different wavelengths of a wavelength division multiplexed optical link and launch each of the different wavelengths into a different optical fiber. In either mode of operation, the device meets the DWDM requirements for low polarization dependent loss, low insertion loss with single mode fiber optic systems, low cross talk between wavelength channels, and low return loss.

While the invention will be described with respect to a preferred embodiment configuration and with respect to particular devices used therein, it will be understood that the invention is not to be construed as limited in any manner by either such configuration or components described herein. Also, while the particular types of lasers and optical components used in the preferred embodiment are described herein, it will be understood that such particular components are not to be construed in a limiting manner. Instead, the functionality of those devices should be appreciated. Further, while the preferred embodiment of the invention will be described in relation to transmitting and receiving information over an optical fiber, it will be understood that the scope of the invention is not to be so limited. The principles of the invention apply to the use of multiplexing and launching a plurality of different wavelength optical signals into a single transmission device and demultiplexing a plurality of different wavelength optical signals and launching the plurality of signals into separate transmission devices. These and other variations of the invention will become apparent to those skilled in the art upon a more detailed description of the invention.

The advantages and features which characterize the invention are pointed out with particularity in the claims annexed hereto and forming a part hereof. For a better understanding of the invention, however, reference should be had to the drawing which forms a part hereof and to the accompanying descriptive matter, in which there is illustrated and described a preferred embodiment of the invention.

### Brief Description of the Drawing

Referring to the drawing, wherein like numerals represent like parts throughout the several views:
Fig. 1 is a functional block diagram of a demultiplexer constructed in accordance with the principles of the present invention.
Figs. 2a - 2e are diagrammatic figures illustrating the changes in beam diameter and the polarization state of the various wavelength optical signals as they progress through the apparatus 15 of Fig. 1.
Fig. 3 is a functional block diagram of a multiplexer constructed in accordance with the principles of the present invention.
Figs. 4a - 4e are diagrammatic figures illustrating the changes in beam diameter and the polarization state of the various wavelength optical signals as they progress through the apparatus 16 of Fig. 3.
Fig. 5 illustrates an environment in which the principles of the present invention multiplexer 16 and demultiplexer 15 may be employed.
Fig. 6 illustrates the polarizing beamsplitter 23, 29, 23', and 29' in Figs 1 and 3.
Fig. 7 illustrates the light beams through prism 25 and 25' in more detail.
Figs. 8a and 8b illustrate two possible configurations of the polarizing beamsplitter 23, 29, 23' and 29' of Figs. 1 and 3.

### Detailed Description

A device constructed in accordance with the principles of the present invention can preferably be used for either multiplexing or demultiplexing several closely spaced optical wavelengths. Therefore, the device operation and components will be described in detail for operation as a demultiplexer. The reverse operating mode, i.e., as a multiplexer, will be described more briefly below since those of skill in the art will appreciate that essentially only the direction of propagation of the light is changed.

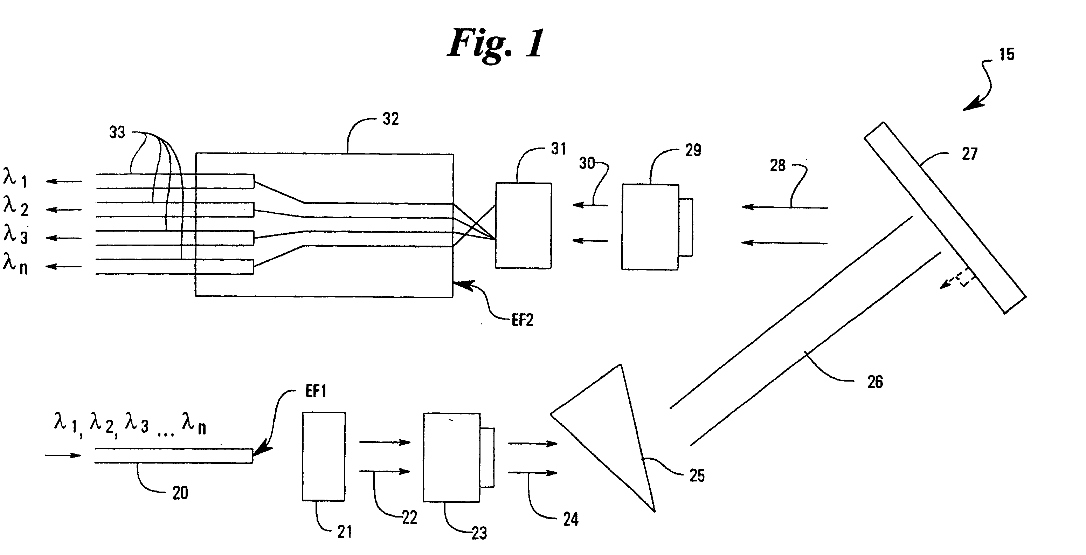

Turning now to Fig. 1, there is illustrated in functional form the components and operation of an optical demultiplexer device constructed in accordance with the principles of the present invention. The demultiplexer device is shown generally by the designation 15. Several wavelengths (e.g., λ₁, λ₂, λ₃, through λₙ) are transmitted to the device 15 by a single optical fiber 20. The light exiting the optical fiber 20 is collected and collimated by collimating lens assembly 21. Light at each of the wavelengths exits the collimating lens assembly 21 as a collimated beam. It will be appreciated that the differing wavelengths exit the collimating lens assembly 21 as an equal number of collimated beams (i.e., there are a number of wavelength components of the beam equal to wavelengths λₙ) which propagate along parallel directions, along the same path, and are incident on beamsplitter component 23.

Preferably the specifications for the collimating lens assembly 21 are that the numerical aperture (NA) of the lens assembly (21 and 21') match that of the guided beam in the optical fiber 20 to minimize input and output coupling losses with the optical fiber. Also, the aperture of the lens assembly is preferably approximately twice the 1/ e² beam diameter of the free space propagating collimated beams to reduce diffraction effects which can increase both insertion loss and polarization dependent loss.

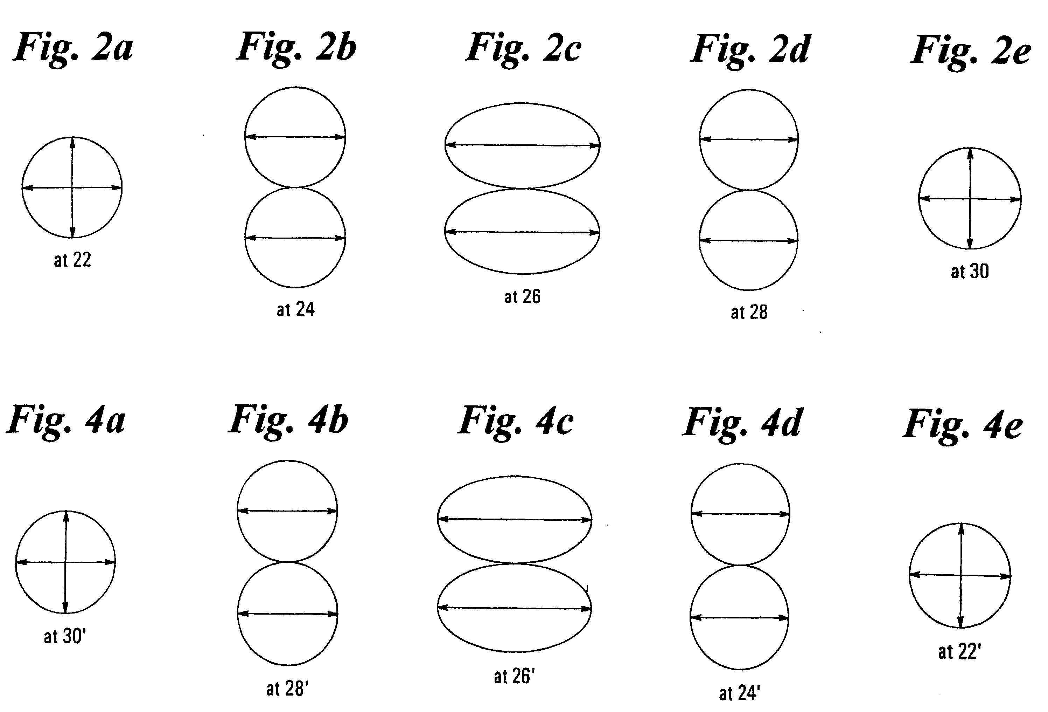

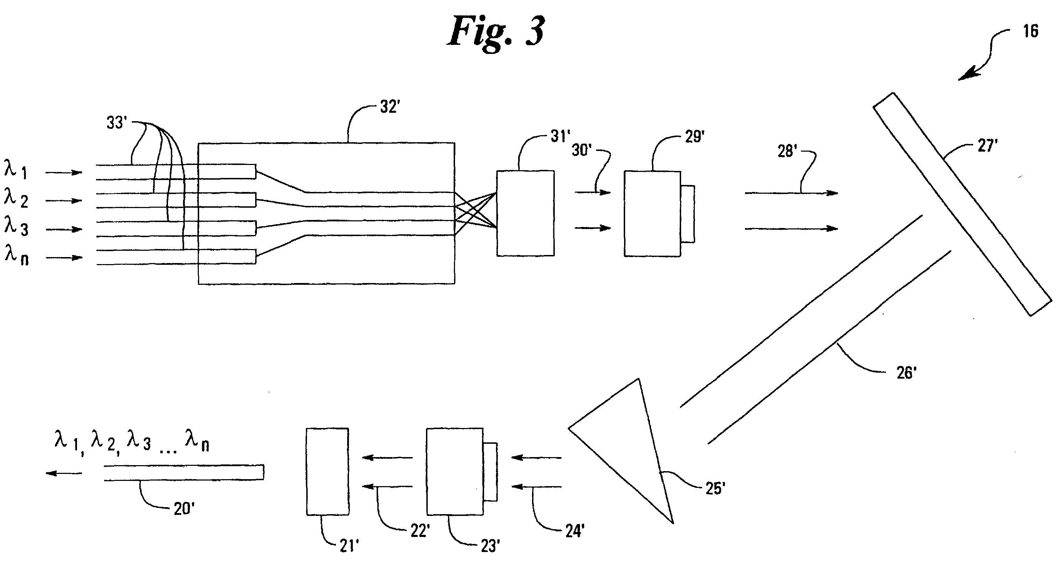

Beamsplitter 23 splits the collimated beam into two collimated beams and also includes a half wave plate for rotating the polarization of one of the two beams (as defined by the beamsplitting interface) so that the polarization of both collimated beams is perpendicular to the grooves on the diffraction grating element 27. By incorporating beamsplitter 23, greater than 98% of the light exiting the optical fiber 20 is conditioned to have the proper polarization direction at the diffraction grating 27 so to achieve optimum diffraction efficiency, independent of the polarization state of the light exiting the optical fiber 20. The polarization of the collimated beams at designation 22 is best seen in Fig. 2a and at designation 24 is best seen in Fig. 2b.

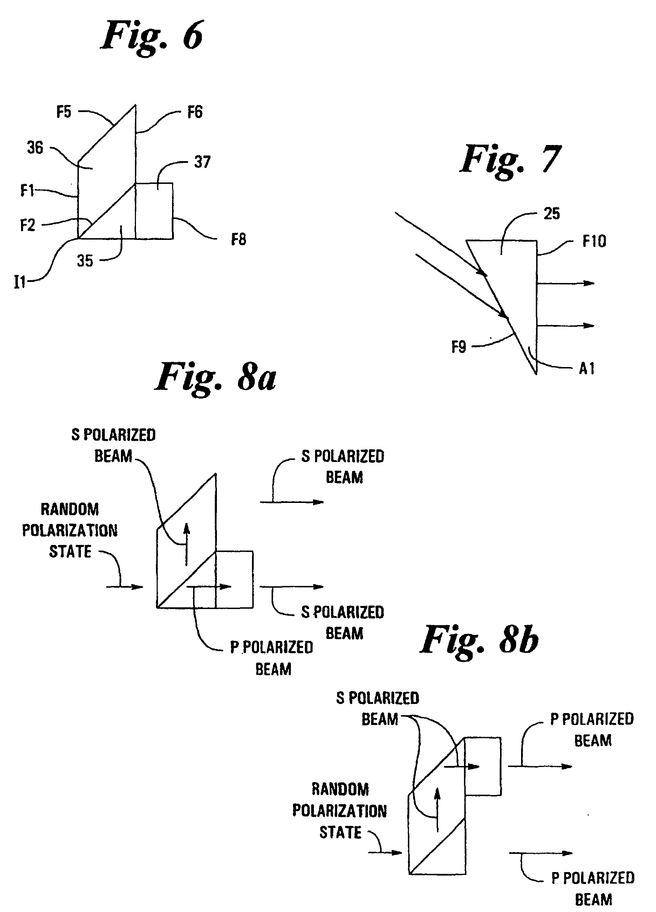

Now referring to Fig. 6, the preferred specifications for the beamsplitter with half wave plate 23 are next described. Three components, a right angle prism 35, a beam displacement prism 36, and a half wave plate 37 are cemented together to form a monolithic structure 23. The face F2 of prism 36 (which forms an interface I1 with prism 35) is coated with a multilayer dielectric polarizing beamsplitter coating. Component faces F1, F6, and F8 are antireflective coated. Light incident on interface I1 is split into two components, one polarized perpendicular to the plane of incidence (i.e., s component) and one polarized parallel to the plane of incidence (i.e., p component). The s component is reflected to face F5 where it undergoes total internal reflection so as to exit face F6 of prism 36. The p component is transmitted to the half wave plate 37. As the light propagates through the half wave plate, the polarization direction is rotated 90° so that when the light exits face F8 of the half wave plate 37, the polarization direction is parallel to that of the s component which exits face F6 of prism 36.

Polarizing beamsplitters 23, 23', 29, and 29' of Figs. 1 and 3 are shown oriented so that the two beams exiting (or entering) the polarizing beamsplitter propagate parallel to each other in a plane which is perpendicular to the plane of the DWDM device 15. For this configuration, the polarizing beamsplitter is constructed as shown in Fig. 8a. The polarizing beamsplitters could also be rotated 90° so that the two beams exiting (or entering) the polarizing beamsplitter propagate parallel to each other in a plane which is parallel the plane of DWDM device 15. For this configuration, the polarizing beamsplitter is constructed as shown in Fig. 8b. In this case, the p polarized component (as defined by the incident light direction and the interface I1 of Fig. 6) is oriented perpendicular to the diffraction grating grooves.

Now returning to Fig. 1, the split, polarized, and collimated beams then pass through optically transparent prism 25 which expands the diameter of the beams in the direction of polarization, i.e., the direction perpendicular to the diffraction grating 27 grooves. Fig. 2c schematically illustrates the expansion of the diameter of the collimated beam shape along the path from the beam shaping prism 25 to the diffraction grating 27, designated as 26. Beam expansion in one direction is implemented because the beam undergoes an anamorphic demagnification upon diffraction at grating 27. The diffracted beam then has a circular cross section which increases coupling efficiency to the circularly symmetric optical fibers (33 and 20) and integrated optic waveguides of integrated optic fanout circuit 32.

The preferred prism 25 is described with reference to Figure 7. The prism is a right angle prism and fabricated using a high index (e.g., n = 1.744) glass material. Angle Al of the right angle prism is in the range of 25° to 30°. The collimated light beam is incident on the hypotenuse (face F9) of the right angle prism at an angle which is approximately equal to the Brewsters angle for the air to glass interface. The incident light which is s polarized relative to the beam splitting interface of the polarizing beamsplitter 23, is p polarized relative to the plane of incidence at the anamorphic beam expanding prism 25. Thus, the reflectance for the p polarized light incident on surface F9 is less than one percent (<1%). Light transmitted through prism 25 is incident on face F10 at near normal incidence. Face F10 is antireflective coated to reduce reflection losses. Refraction of the incident light beam at surface F9 increases the diameter of the beam in the direction of the hypotenuse of the right angle prism 25, and since the light is near normal incidence at face F10, the light exits prism face F10 with an anamorphic magnification of the beam diameter as described in Figs. 2b and 2c.

At the diffraction grating 27, the collimated beams of each of the different wavelengths (λ₁, λ₂, λ₃ through λₙ) is diffracted into a different angular direction relative to the grating normal (shown in phantom). Also, the collimated beam of each wavelength undergoes an anamorphic demagnification upon diffraction. That is, the beam diameter in the direction perpendicular to the grating grooves is reduced (as best seen at designation 28 in Fig. 2d). Accordingly, after diffraction, the collimated beam cross section is again nearly circular. The diffraction grating 27 is a holographic grating with ∼ 9000 grooves/cm for the 100 GHz channel spacing, and ∼ 11000 grooves/cm for the 50 GHz channel spacing.

The two collimated beams at each wavelength are then recombined into a single beam by the beamsplitting polarizer and half waveplate component 29. Thus, there is a single beam for each wavelength exiting component 29. The two beams are recombined into a single beam to improve the coupling efficiency to the integrated optic waveguides of integrated optic fanout circuit 32 (and to the optical fiber 20 in the reverse mode operation, i.e. as a multiplexer). Each beam at designation 30 again has two mutually perpendicular polarization components (best seen in Fig. 2e). Also, the collimated beam for each wavelength propagates in a different angular direction relative to the optic axis of the lens assembly component 31. The beamsplitting polarizer and half waveplate component 29 is identical to component 23.

Since the collimated beam for each wavelength is propagating in a different angular direction at designation 30, the lens assembly 31 focuses each wavelength to a different spatial location along a line in the focal plane of the lens assembly 31. In the preferred embodiment, the lens assembly 31 is identical to lens assembly 21.

The integrated optic fan out circuit component 32 has an array of integrated optic waveguides with input coupling ports equally spaced at a distance of several tens of microns. The spacing of the waveguide input ports, along with the focal length of lens assembly 31 and the period of the diffraction grating 27 are specified so that the focused spot of each of the wavelengths aligns to a different waveguide coupling port. Also, the collimated beam diameters and the focal length of lens assembly 31 are specified to match the diameter of the focused spot with the mode diameter of the guided beam in the integrated optic waveguides. This ensures good optical coupling efficiency to the waveguides.

The integrated optic waveguides of component 32 fan out to a larger separation which permits butt coupling of the waveguides to a linear array of single mode optical fibers 33. Thus, each wavelength is coupled to a different optical fiber 33 which can then be used to transmit each wavelength to different local terminals. The end faces of the waveguide coupling ports EF2 and optical fiber end face EF1 are angle polished to reduce back reflected light to <60 dB. It will be appreciated that reducing feed back to the laser sources reduces optical intensity noise on the laser output beam. The waveguide device 32 is a silica-based integrated optical waveguide circuit.

Turning now to Fig. 3, there is illustrated a multiplexer device 16 which includes components similar to the demultiplexer described above in connection with Fig. 1. It will be appreciated that the multiplexer device 16 is used in the reverse direction as a demultiplexer 15 and is used to combine several laser sources of different wavelengths. Accordingly, those components which are similar to components described above in connection with Fig. 1 are designated by the same number designation followed by a prime. It will be appreciated by those of skill in the art that the considerations for selection of the components are generally the same, although both overall and individually the components perform "reverse" functions in the two embodiments.

First, each of the wavelengths (λ₁, λ₂, λ₃ through λₙ) is coupled into the multiplexer device 16 from a different single mode optical fiber 33'. The wavelengths are launched into a fan-in circuit 32', wherein the light in each fiber is coupled into a different integrated optic waveguide. These waveguides are arranged and configured to guide each of the wavelengths to a different output coupling port. The waveguide output coupling ports are equally spaced at a distance of several tens of microns. At the output coupling ports, each wavelength is launched into a free space propagating beam.

Lens assembly 31' collects the light emitted at the linear array of waveguide output ports and collimates the light. Since each wavelength is launched from a port located at a different location along a line in the focal plane of lens assembly 31', the light at each wavelength propagates in a different angular direction after collimation by lens assembly 31'. A schematic diagram of the light at designation 30' is illustrated in Fig. 4a.

Next, the beamsplitting polarizer and half wave plate assembly 29' splits each of the collimated beams into two beams and rotates the polarization of the p component beam so that the polarization of each of the two beams for each of the wavelengths is perpendicular to the grating grooves of the diffraction grating 27'. A schematic diagram of the polarization state and the beam cross section shape at designation 28' is shown in Fig. 4b.

At the diffraction grating 27', each of the collimated beams (for each of the wavelengths) is diffracted into the same angular direction. That is, the collimated beams for each of the diffracted wavelengths propagates in parallel directions along the same optical path. Upon diffraction by component 27', the collimated beams undergo an anamorphic magnification so that the beam diameter in the direction perpendicular to the grating grooves is increased by approximately a factor of two. The beam cross sectional shape and the polarization direction of the beam at designation 26' is shown schematically in Fig. 4c.

Beam shaping prism 25' then reduces the diameter of the collimated beams in the direction of polarization so that the collimated beams propagating from component 25' to components 23', 21' and 20' have a circular cross sectional shape. This circular cross section shape at designation 24' is illustrated schematically in Fig. 4d.

Polarizing beam splitter 23' recombines the two collimated beams for each of the wavelengths and rotates the polarization of one of the two beams so that the collimated beam exiting component 23' (e.g., at designation 22') has two polarization states, as shown schematically in Fig. 4e. Lens assembly 21' focuses the collimated beams for each wavelength onto the end face of optical fiber 20'. Preferably, beam diameters and lens assembly focal lengths are specified to match the focused spot diameter to the diameter of the guided mode in the optical fiber. This ensures efficient input coupling of the optical beam. The end faces of the waveguide coupling ports of fan in circuit 32' and optical fiber end faces 33', and 20' are angle polished to reduce back reflected light to less than sixty dB (<60 dB). It will be appreciated that reducing feed back to the laser sources reduces optical intensity noise on the laser output beam.

### In Operation

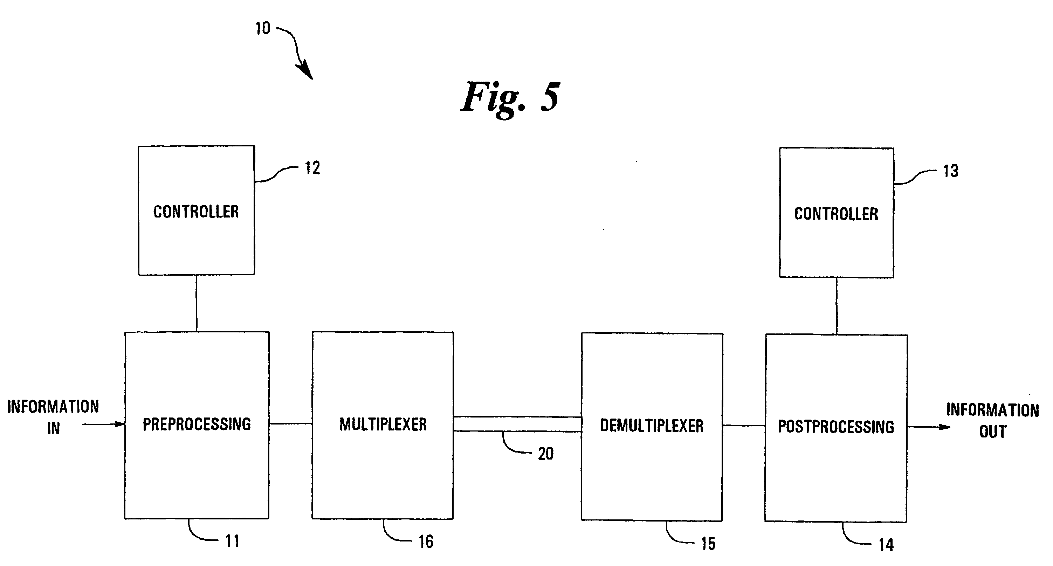

Turning now to Fig. 5, in use, the preferred multiplexer 16 and demultiplexer 15 may be used in a system 10 for transmitting information over optical fiber 20. Devices which provide for multiplexing a plurality of wavelengths, including modulating the wavelengths to encode information therein are described in more detail in U.S. Patent Application Ser. No. 08/769,459, filed December 18, 1996; U.S. Patent Application Ser. No. 08/482,642, filed June 7, 1995; and U.S. Patent Application Ser. No. 08/257,083, filed June 9, 1994. Each of the foregoing applications are owned by the Assignee of the present invention and are hereby incorporated herein and made a part hereof

Still referring to Fig. 5, encoded information may be provided to multiplexer 16 by preprocessing block 11. Providing control function(s) for block 11 is controller block 12 which may be comprised of a mini-computer, special purpose computer and/or personal computer as will be appreciated by those of skill in the art. The information provided to block 11 may include digitized data, voice, video, etc. However, it will be appreciated that amplitude modulation may be used in connection with multiplexer 16 and demultiplexer 15.

The demultiplexer 15 provides the separated optical signals to post-processing block 14. Providing control function(s) for block 14 is controller block 13 which may be comprised of a mini-computer, special purpose computer and/or personal computer.

In this manner, the multiplexer 16 and demultiplexer 15 help develop a building block on which new telecommunication system architectures can be developed. These new telecommunication system architectures are capable of distributing large amounts of information throughout the network. Wavelength division multiplexing and high speed external modulation of the laser light provide for the generation of the large bundles of information.

It will be appreciated that the principles of this invention apply not only to the circuitry used to implement the invention, but also to the method in general of automatically utilizing the plurality of wavelengths to transmit information over a single fiber optic device. While a particular embodiment of the invention has been described with respect to its application, it will be understood by those skilled in the art that the invention is not limited by such application or embodiment or the particular components disclosed and described herein. It will be appreciated by those skilled in the art that other components that embody the principles of this invention and other applications therefor other than as described herein can be configured within the spirit and intent of this invention. The arrangement described herein is provided as only one example of an embodiment that incorporates and practices the principles of this invention. Other modifications and alterations are well within the knowledge of those skilled in the art and are to be included within the scope of the appended claims.

## Claims

1. An optical fiber transmission apparatus, the apparatus comprising:
a. a plurality of laser sources for generating optical beams;
b. a first optical transmission fiber (20);
c. multiplexer means (16) for spatially combining the optical beams from the laser sources, each of which is a different wavelength, and launching the spatially combined optical beams into the optical transmission fiber (20) to form a wavelength division multiplexed optical signal, wherein the multiplexer means includes:
i. a diffraction grating (27');
ii. means for shaping the optical beams (25'); and
iii. means for adjusting the polarization direction of the optical beams (23', 29'), whereby the diffraction grating efficiency is improved and the polarization dependent loss is minimized;
d. a plurality of second optical fibers (33);
e. demultiplexer means (15) for spatially separating the different wavelengths from the optical transmission fiber (20) and launching each of the different wavelengths into separate second optical fibers (33), wherein the demultiplexer means includes:
i. a diffraction grating (27);
ii: means for shaping the optical beams (25); and
iii. means for adjusting the polarization direction of the optical beams (23, 29), whereby the diffraction grating efficiency is improved and the polarization dependent loss is minimized; and
f. wherein the means for launching each of the different wavelengths into the plurality of second optical fibers (33) is an integrated optic fanout circuit (32) having a plurality of coupling ports arranged and configured to improve the optical channel wavelength bandwidth of the apparatus.

2. The apparatus of claim 1, wherein the first optical transmission fiber (20) is a single mode optical fiber communication link.

3. The apparatus of claim 1, wherein the means for adjusting the polarization direction of the optical beams (23, 23', 29, 29') includes means for rotating the polarization direction of either the p polarized beam or the s polarized beam.

4. The apparatus of claim 3, wherein the means for rotating the polarization direction includes a polarizing beamsplitter and a half-wave plate (23, 23', 29, 29').

5. The apparatus of claim 4, wherein the polarizing beamsplitter and halfwave plate are a monolithic structure comprised of:
a. a right angle prism (35);
b. a beam displacement prism (36); and
c. a half-wave plate (37).

6. The apparatus of claim 1, wherein the means for shaping the optical signals includes a prism (25).

7. A bi-directional optical apparatus, of the type which is used in connection with optical beams generated by a plurality of laser sources and which is carried by optical fibers, the apparatus comprising:
a. a diffraction grating (27);
b. means for shaping the optical beams (25);
c. means for adjusting the polarization direction of the optical beams (23, 29), whereby the diffraction grating (27) efficiency is improved and the polarization dependent loss is minimized; and
d. an integrated optic fanout circuit (32) having a plurality of coupling ports arranged and configured to increase the optical channel wavelength bandwidth.

8. A bidirectional optical apparatus, of the type which is used in connection with optical signals generated by a plurality of laser sources and which is carried by optical fibers, the apparatus comprising:
a. an optical fiber (20);
b. multiplexer means (16) for spatially combining the optical signals from several laser sources, each of which is a different wavelength, and launching the spatially combined optical signals into a single optical fiber via an integrated optic fanout circuit (32) having a plurality of coupling ports to form a wavelength division multiplexed optical signal; and
c. demultiplexer means (15) for spatially separating the different wavelengths from the single optical fiber carrying wavelength division multiplexed optical signals and launching each of the different wavelengths into a separate optical fiber, wherein the multiplexer and demultiplexer means are comprised of identical components.

9. The apparatus of claim 8, wherein the optical fiber is a single mode optical fiber communication link.

10. The apparatus of claim 8, wherein the multiplexer (16) and demultiplexer means (15) include:
a. means for collimating (21) the light exiting the optical fiber end face;
b. means for splitting the plurality of optical wavelength signals into two beams (23);
c. means for rotating the polarization direction of either the p polarized beam or the s polarized beam (23);
d. means for expanding the diameter of the collimated beams in the direction of the polarization (25);
e. means for diffracting each of the different wavelength into a different angular direction relative to a defined direction (27);
f. means for reducing the expanded diameter of the collimated beams in the direction of the polarization (27);
g. means for recombining the two optical beams at each wavelength into a single beam for each wavelength signal, and wherein the recombined beam for each wavelength has two mutually perpendicular polarization components and is propagating in a different angular direction relative to an optic axis (29); and
h. means for focusing the wavelength signals (31) to a different spatial location along a line in the focal plane of the focusing means and onto a respective coupling port.

11. The apparatus of claim 10, wherein the means for expanding the diameter of the beam in the direction of the polarization is a prism (25, 25').

12. The apparatus of claim 10, wherein the means for diffracting the beam is a diffraction grating (27,27').

13. The apparatus of claim 12, wherein the diffraction grating is a holographic grating.

14. The apparatus of claim 10, wherein the means for splitting the collimated light beam into two beams which are polarized in two mutually perpendicular directions, is a glass prism assembly with a multi-layer dielectric polarizing beamsplitter coating (23).

15. The apparatus of claim 10, wherein the means for rotating the polarization of the beams is a half-wave plate (37).

16. The apparatus of claim 13, wherein the diffraction grating has a groove density of between about 9000 grooves/cm and about 11000 grooves/cm.

17. A bidirectional optical device comprising:
a. a diffraction grating (27, 27');
b. means for shaping the optical beams (25, 25'); and
c. means for adjusting the polarization direction of the optical beams (23, 23', 29,29'), whereby the diffraction grating efficiency is improved and the polarization dependent loss is minimized,
d. wherein the apparatus may be used as both:
i. a multiplexer (16) to spatially combine the optical beams from several laser sources, each of which is a different wavelength and launch the spatially combined laser beams into a single optical fiber (20); and
ii. a demultiplexer (15) to spatially separate the different wavelengths of a wavelength division multiplexed optical link and launch each of the different wavelengths into a different optical fiber (33) via an integrated optic fan out circuit (32) having a plurality of coupling ports.

18. The device of claim 17, wherein the components comprising the multiplexer (16) and the demultiplexer (15) are identical and are used in connection with a single mode optical fiber communication link.

19. The device of claim 18, wherein the device is used in a single mode optical fiber communication link environment utilizing dense wavelength division multiplexing (DWDM) in which the wavelengths of the laser sources are separated by integer multiples of 0.4 nm.

20. A method of demultiplexing a plurality of light signals carried by an optical fiber comprising the steps of:
a. collimating the light exiting an optical fiber end face;
b. splitting the plurality of optical wavelength signals into two beams;
c. rotating the polarization of either the p polarized or s polarized beam;
d. expanding the diameter of the collimated beams in the direction of the polarization;
e. diffracting each of the different wavelength beams into a different angular direction relative to a defined direction;
f. reducing the expanded diameter of the collimated beams in the direction of the polarization;
g. recombining the two optical beams at each wavelength into a single beam for each wavelength signal, and wherein the recombined beam for each wavelength has two mutually perpendicular polarization components and is propagating in a different angular direction relative to an optic axis;
h. focusing the optical wavelength signals to a different spatial location along a line in the focal plane of the focusing means; and
i. receiving the focused signals and launching the individual signals into separate optical fibers via an integrated optic fanout circuit having a plurality of coupling parts.

21. The method of claim 20, wherein the polarization of both beams is perpendicular to the grooves on a diffraction grating.

## Patentansprüche

1. Lichtleitfaserübertragungseinrichtung, wobei die Einrichtung folgendes umfasst:
a. eine Mehrzahl von Laserquellen zum Erzeugen von optischen Bündeln;
b. eine erste optische Übertragungsfaser (20) ;
c. ein Multiplexermittel (16) zum räumlichen Kombinieren der optischen Bündel von den Laserquellen, von denen jedes eine unterschiedliche Wellenlänge hat, und Einkoppeln der räumlich kombinierten optischen Bündel in die optische Übertragungsfaser (20), um ein wellenlängengeschachteltes optisches Signal zu bilden, worin das Multiplexermittel folgendes umfasst:
i. ein Beugungsgitter (27');
ii. ein Mittel zum Formen der optischen Bündel (25'); und
iii. ein Mittel zum Einstellen der Polarisationsrichtung der optischen Bündel (23', 29'), wodurch der Beugungsgitternutzeffekt verbessert und der polarisationsabhängige Verlust minimiert wird;
d. eine Mehrzahl von zweiten optischen Fasern (33) ;
e. ein Demultiplexermittel (15) zum räumlichen Trennen der unterschiedlichen Wellenlängen aus der optischen Übertragungsfaser (20) und Einkoppeln von jeder der unterschiedlichen Wellenlängen in separate zweite optische Fasern (33), worin das Demultiplexermittel folgendes umfasst:
i. ein Beugungsgitter (27);
ii. ein Mittel zum Formen der optischen Bündel (25); und
iii. ein Mittel zum Einstellen der Polarisationsrichtung der optischen Bündel (23, 29), wodurch der Beugungsgitternutzeffekt verbessert und der polarisationsabhängige Verlust minimiert wird; und
f. worin das Mittel zum Einkoppeln von jeder der unterschiedlichen Wellenlängen in die Mehrzahl von zweiten optischen Fasern (33) eine integrierte optische Ausgangsfächerungsschaltung (32) ist, die eine Mehrzahl von Kopplungskanälen hat, welche so angeordnet und konfiguriert sind, dass die Wellenlängenbandbreite des optischen Kanals der Einrichtung verbessert ist.

2. Einrichtung nach Anspruch 1, worin die erste optische Übertragungsfaser (20) ein Monomodelichtleitfaserkommunikationsglied ist.

3. Einrichtung nach Anspruch 1, worin das Mittel zum Einstellen der Polarisationsrichtung der optischen Bündel (23, 23', 29, 29') ein Mittel zum Drehen der Polarisationsrichtung von entweder dem p-polarisierten Bündel oder dem s-polarisierten Bündel umfasst.

4. Einrichtung nach Anspruch 3, worin das Mittel zum Drehen der Polarisationsrichtung einen polarisierenden Bündelteiler und eine Halbwellenplatte (23, 23', 29, 29') umfasst.

5. Einrichtung nach Anspruch 4, worin der polarisierende Bündelteiler und die Halbwellenplatte eine monolithische Struktur sind, bestehend aus:
a. einem rechtwinkligen Prisma (35);
b. einem Bündelverlagerungsprisma (36); und
c. einer Halbwellenplatte (37).

6. Einrichtung nach Anspruch 1, worin das Mittel zum Formen der optischen Signale ein Prisma (25) umfasst.

7. Bidirektionale optische Einrichtung von der Art, welche in Verbindung mit optischen Bündeln verwendet wird, die durch eine Mehrzahl von Laserquellen erzeugt werden und welche durch optische Fasern untergestützt wird, wobei die Einrichtung folgendes umfasst:
a. ein Beugungsgitter (27) ;
b. Mittel zum Formen der optischen Bündel (25) ;
c. Mittel zum Einstellen der Polarisationsrichtung der optischen Bündel (23, 29), wodurch der Nutzeffekt des Beugungsgitters (27) verbessert und der polarisationsabhängige Verlust minimiert wird; und
d. eine integrierte optische Ausgangsfächerungsschaltung (32), die eine Mehrzahl von Kopplungskanälen hat, welche zum Erhöhen der Wellenlängenbandbreite des optischen Kanals angeordnet und konfiguriert sind.

8. Bidirektionale optische Einrichtung von der Art, welche in Verbindung mit optischen Signalen verwendet wird, die durch eine Mehrzahl von Laserquellen erzeugt werden, und welche durch optische Fasern unterstützt wird, wobei die Einrichtung folgendes umfasst:
a. eine optische Faser (20) ;
b. ein Multiplexermittel (16) zum räumlichen Kombinieren der optischen Signale von mehreren Laserquellen, von denen jedes eine unterschiedliche Wellenlänge hat, und Einkoppeln der räumlich kombinierten optischen Signale in eine einzelne optische Faser über eine integrierte optische Ausgangsfächerungsschaltung (32), die eine Mehrzahl von Kopplungskanälen hat, um ein wellenlängengeschachteltes optisches Signal zu bilden; und
c. ein Demultiplexermittel (15) zum räumlichen Trennen der unterschiedlichen Wellenlängen aus der einzelnen optischen Faser, die wellenlängengeschachtelte optische Signale überträgt, und Einkoppeln von jeder der unterschiedlichen Wellenlängen in eine separate optische Faser, worin das Multiplexer- und Demultiplexermittel aus identischen Komponenten bestehen.

9. Einrichtung nach Anspruch 8, worin die optische Faser ein Monomodenlichtleitfaserkommunikationsglied ist.

10. Einrichtung nach Anspruch 8, worin das Multiplexermittel (16) und das Demultiplexermittel (15) folgendes umfassen:
a. ein Mittel zum Kollimieren (21) des Lichts, das aus der Endfläche der optischen Faser austritt;
b. ein Mittel zur Aufspaltung der Mehrzahl der Signale optischer Wellenlänge in zwei Bündel (23) ;
c. ein Mittel zum Drehen der Polarisationsrichtung von entweder dem p-polarisierten Bündel oder dem s-polarisierten Bündel (23);
d. ein ein Mittel zum Ausweiten des Durchmessers der kollimierten Bündel in der Richtung der Polarisation (25) ;
e. ein Mittel zum Beugen von jeder der unterschiedlichen Wellenlängen in eine unterschiedliche Winkelrichtung relativ zu einer definierten Richtung (27) ;
f. ein Mittel zum Reduzieren des ausgeweiteten Durchmessers der kollimierten Bündel in der Richtung der Polarisation (27) ;
g. ein Mittel zum erneuten Kombinieren der beiden optischen Bündel bei jeder Wellenlänge zu einem einzigen Bündel für jedes Wellenlängensignal, und worin das erneut kombinierte Bündel für jede Wellenlänge zwei gegenseitig senkrechte Polarisationskomponenten hat und sich in einer unterschiedlichen Winkelrichtung relativ zu einer optischen Achse (29) fortpflanzt; und
h. ein Mittel zum Fokussieren der Wellenlängensignale (31) auf einen unterschiedlichen räumlichen Ort entlang einer Linie in der Brennebene des Fokussierungsmittels und auf einen jeweiligen Kopplungskanal.

11. Einrichtung nach Anspruch 10, worin das Mittel zum Ausweiten des Durchmessers des Bündels in der Richtung der Polarisation ein Prisma (25, 25') ist.

12. Einrichtung nach Anspruch 10, worin das Mittel zum Beugen des Bündels ein Beugungsgitter (27, 27') ist.

13. Einrichtung nach Anspruch 12, worin das Beugungsgitter ein holographisches Gitter ist.

14. Einrichtung nach Anspruch 10, worin das Mittel zur Aufspaltung des kollimierten Lichtbündels in zwei Bündel, welche in zwei gegenseitig senkrechten Richtungen polarisiert sind, ein Gasprismenaufbau mit einer mehrschichtigen dielektrischen polarisierenden Bündelaufspaltungsbeschichtung (23) ist.

15. Einrichtung nach Anspruch 10, worin das Mittel zum Drehen der Polarisation der Bündel eine Halbwellenplatte (37) ist.

16. Einrichtung nach Anspruch 13, worin das Beugungsgitter eine Rillendichte von zwischen etwa 9000 Rillen/cm und etwa 11000 Rillen/cm hat.

17. Bidirektionale optische Einrichtung, umfassend:
a. ein Beugungsgitter (27, 27');
b. ein Mittel zum Formen der optischen Bündel (25, 25'); und
c. ein Mittel zum Einstellen der Polarisationsrichtung der optischen Bündel (23, 23', 29, 29'), wodurch der Beugungsgitternutzeffekt verbessert und der polarisationsabhängige Verlust minimiert wird,
d. worin die Einrichtung verwendet werden kann sowohl als:
i. ein Multiplexer (16) zum räumlichen Kombinieren der optischen Bündel von mehreren Laserquellen, von denen jedes eine unterschiedliche Wellenlänge hat, und Einkoppeln der räumlich kombinierten Laserbündel in eine einzige optische Faser (20); als auch als
ii. ein Demultiplexer (15) zum räumlichen Trennen der unterschiedlichen Wellenlängen eines wellenlängengeechachtelten optischen Glieds und Einkoppeln von jeder der unterschiedlichen Wellenlängen in eine andere optische Faser (33) über eine integrierte optische Ausgangsfächerungsschaltung (32), die eine Mehrzahl von Kopplungskanälen hat.

18. Einrichtung nach Anspruch 17, worin die Komponenten, welche der Multiplexer (16) und der Demultiplexer (15) umfasst, identisch sind und in Verbindung mit einem Einmodenlichtleitfaserkommunikationsglied verwendet werden.

19. Einrichtung nach Anspruch 18, worin die Einrichtung in einer Einmodenlichtleitfaserkommunikationsgliedumgebung unter Benutzung von Schachtelung dichter Wellenlängen (DWDM) verwendet wird, worin die Wellenlängen der Laserquellen durch ganzzahlige Vielfache von 0,4 nm getrennt sind.

20. Verfahren des Demultiplexierens einer Mehrzahl von Lichtsignalen, die durch eine optische Faser übertragen werden, umfassend die Schritte des:
a. Kollimierens des Lichts, das aus der Endfläche einer optischen Faser austritt;
b. Aufspaltens der Mehrzahl von Signalen optischer Wellenlänge in zwei Bündel;
c. Drehens der Polarisation von entweder dem p-polarisierten oder dem s-polarisierten Bündel;
d. Aufweitens des Durchmessers der kollimierten Bündel in der Richtung der Polarisation;
e. Beugens von jedem der Bündel unterschiedlicher Wellenlänge in eine unterschiedliche Winkelrichtung relativ zu einer definierten Richtung;
f. Reduzierens des aufgeweiteten Durchmessers der kollimierten Bündel in der Richtung der Polarisation;
g. erneuten Kombinierens der beiden optischen Bündel bei jeder Wellenlänge in ein einziges Bündel für jedes Wellenlängensignal, und worin das erneut kombinierte Bündel für jede Wellenlänge zwei gegenseitig senkrechte Polarisationskomponenten hat und sich in einer unterschiedlichen Winkelrichtung relativ zu einer optischen Achse fortpflanzt;
h. Fokussierens der Signale optischer Wellenlänge auf einen unterschiedlichen räumlichen Ort entlang einer Linie in der Brennebene des Fokussierungsmittels; und
i. Empfangs der fokussierten Signale und Einkoppelns der individuellen Signale in separate optische Fasern über eine integrierte optische Ausgangsfächerungsschaltung, die eine Mehrzahl von Kopplungsteilen hat.

21. Verfahren nach Anspruch 20, worin die Polarisation von beiden Bündeln senkrecht zu den Rillen auf einem Beugungsgitter ist.

## Revendications

1. Appareil de transmission par fibres optiques, l'appareil comprenant :
a. une pluralité de sources laser pour générer des faisceaux optiques ;
b. une première fibre de transmission optique (20) ;
c. des moyens multiplexeurs (16) pour combiner spatialement les faisceaux optiques provenant des sources lasers, chacun d'entre eux ayant une longueur d'onde différente, et pour lancer les faisceaux optiques combinés spatialement à l'intérieur de la fibre de transmission optique (20) pour former un signal optique multiplexé en longueur d'onde, dans lequel les moyens multiplexeurs comprennent :
i. un réseau de diffraction (27') ;
ii. des moyens pour former les faisceaux optiques (25') et
iii. des moyens pour ajuster le sens de polarisation des faisceaux optiques (23', 29'), moyennant quoi l'efficacité du réseau de diffraction est améliorée et la perte liée à la polarisation est réduite ;
d. une pluralité de secondes fibres optiques (33) :
e. des moyens démultiplexeurs (15) pour séparer spatialement les longueurs d'ondes différentes provenant de la fibre de transmission optique (20) et lancer chacune des longueurs d'ondes différentes à l'intérieur de secondes fibres optiques distinctes (33), dans lequel les moyens démultiplexeurs comprennent :
i. un réseau de diffraction (27) ;
ii. des moyens pour former les faisceaux optiques (25) ; et
iii. des moyens pour ajuster le sens de polarisation des faisceaux optiques (23, 29), moyennant quoi l'efficacité du réseau de diffraction est améliorée et la perte liée à la polarisation est réduite ; et
f. dans lequel les moyens pour lancer chacune des différentes longueurs d'ondes à l'intérieur de la pluralité de secondes fibres optiques (33) sont un circuit de sortance optique intégré (32) ayant une pluralité de ports de couplage agencés et configurés pour améliorer la largeur de bande de longueur d'onde du canal optique de l'appareil.

2. Appareil selon la revendication 1, dans lequel la première fibre de transmission optique (20) est une liaison de communication par fibre optique monomode.

3. Appareil selon la revendication 1, dans lequel les moyens pour régler le sens de polarisation des faisceaux optiques (23, 23', 29, 29') comprennent des moyens pour assurer la rotation du sens de polarisation du faisceau polarisé p ou bien du faisceau polarisé s.

4. Appareil selon la revendication 3, dans lequel les moyens pour assurer la rotation du sens de polarisation comprennent un séparateur de faisceau polarisant et une lame demi-onde (23, 23', 29, 29').

5. Appareil selon la revendication 4, dans lequel le séparateur de faisceau polarisant et la lame demi-onde sont une structure monolithique comprenant :
a. un prisme à angle droit (35) ;
b. un prisme de déplacement de faisceau (36) et
c. une lame demi-onde (37).

6. Appareil selon la revendication 1, dans lequel les moyens pour former les signaux optiques comprennent un prisme (25).

7. Appareil optique bidirectionnel, du type qui est utilisé en liaison avec des faisceaux optiques générés par une pluralité de sources lasers et qui est acheminé par des fibres optiques, l'appareil comprenant :
a. un réseau de diffraction (27) ;
b. des moyens pour former les faisccaux optiques (25) ;
c. des moyens pour ajuster le sens de polarisation des faisceaux optiques (23, 29), moyennant quoi l'efficacité du réseau de diffraction (27) est améliorée et la perte liée à la polarisation est réduite ; et
d. un circuit de sortance optique intégré (32) ayant une pluralité de ports de couplage agencés et configurés pour augmenter la largeur de bande de longueur d'onde du canal optique.

8. Appareil optique bidirectionnel du type qui est utilisé en liaison avec des signaux optiques générés par une pluralité de sources lasers et qui est acheminé par fibres optiques, l'appareil comprenant :
a. une fibre optique (20) ;
b. des moyens multiplexeurs (16) pour combiner spatialement les signaux optiques provenant de plusieurs sources lasers, chacun d'entre eux ayant une longueur d'onde différente, et pour lancer les signaux optiques combinés spatialement à l'intérieur d'une monofibre optique via un circuit de sortance optique intégré (32) ayant une pluralité de ports de couplage pour former un signal optique multiplexé en longueur d'onde ; et
c. des moyens démultiplexeurs (15) pour séparer spatialement les différentes longueurs d'ondes provenant de la monofibre optique acheminant les signaux optiques multiplexés en longueur d'onde et lançant chacune des longueurs d'onde différentes à l'intérieur d'une fibre optique distincte, dans lequel les moyens multiplexeurs et démultiplexeurs sont équipés de composants identiques.

9. Appareil selon la revendication 8, dans lequel la fibre optique est une liaison de communication par fibre optique monomode.

10. Appareil selon la revendication 8, dans lequel les moyens multiplexeurs (16) et démultiplexeurs (15) comprennent :
a. des moyens pour collimater (21) la lumière sortant de l'extrémité de la fibre optique ;
b. des moyens pour séparer la pluralité de signaux de longueur d'onde en deux faisceaux (23) ;
c. des moyens pour assurer la rotation du sens de polarisation du faisceau polarisé p ou bien du faisceau polarisé s (23) ;
d. des moyens pour étendre le diamètre des faisceaux collimatés dans le sens de la polarisation (25) ;
e. des moyens pour diffracter chacune des différentes longueurs d'ondes en un sens angulaire différent par rapport à un sens déterminé (27) ;
f. des moyens pour réduire le diamètre étendu des faisceaux collimatés dans le sens de la polarisation (27) ;
g. des moyens pour recombiner les deux faisceaux optiques à chaque longueur d'onde en un seul faisceau pour chaque signal de longueur d'onde, et dans lequel le faisceau recombiné pour chaque longueur d'onde a deux composants de polarisation mutuellement perpendiculaires et se propage dans un sens angulaire différent par rapport à un axe optique (29) ; et
h. des moyens pour focaliser les signaux de longueurs d'ondes (31) à une position spatiale différente le long d'une ligne dans le plan focal des moyens de focalisation et sur un port de couplage respectif.

11. Appareil selon la revendication 10, dans lequel les moyens pour étendre le diamètre du faisceau dans le sens de la polarisation sont un prisme (25, 26').

12. Appareil selon la revendication 10, dans lequel les moyens pour diffracter le faisceau sont un réseau de diffraction (27, 27').

13. Appareil selon la revendication 12, dans lequel le réseau de diffraction est un réseau holographique.

14. Appareil selon la revendication 10, dans lequel les moyens pour séparer le faisceau lumineux collimaté en deux faisceaux qui sont polarisés dans deux directions mutuellement perpendiculaires, sont un ensemble prisme en verre avec un dépôt diviseur de faisceau polarisant diélectrique multicouche (23).

15. Appareil selon la revendication 10, dans lequel les moyens pour effectuer une rotation de la polarisation des faisceaux sont une lame demi-onde (37).

16. Appareil selon la revendication 13, dans lequel le réseau de diffraction a une densité de sillons comprise entre 9000 sillons/cm et environ 11000 sillons/cm.

17. Dispositif optique bidirectionnel comprenant :
a. un réseau de diffraction (27, 27');
b. des moyens pour former les faisceaux optiques (25, 25') ;
c. des moyens pour ajuster le sens de polarisation des faisceaux optiques (23, 23', 29, 29'), moyennant quoi l'efficacite du réseau de diffraction est améliorée et la perle liée à la polarisation est réduite,
d. dans lequel l'appareil peut être utilise en tant que :
i. multiplexeur (10) pour combiner spatialement les signaux optiques provenant de plusieurs sources lasers, chacun d'entre eux ayant une longueur d'onde différente, et pour lancer les signaux optiques combinés spatialement à l'intérieur d'une monofibre optique (20) : et
ii. un démultiplexeur (15) pour séparer spatialement les différentes longueurs d'ondes d'une liaison optique multiplexée en longueur d'onde et pour lancer chacune des longueurs d'onde différentes à l'intérieur d'une fibre optique différente (33), via un circuit de sortance optique intégré (32) ayant une pluralité de ports de couplage.

18. Dispositif selon la revendication 17, dans lequel les composants comprenant le multiplexeur (16) et le démultiplexeur (15) sont identiques et sont utilisés en connexion avec une liaison de communication par fibre optique monomode.

19. Dispositif selon la revendication 18, dans lequel le dispositif est utilisé dans un environnement de liaison de communication par fibre optique monomode utilisant le multiplexage en longueur d'onde dense (DWDM) dans lequel les longueurs d'ondes des sources lasers sont séparées par des multiples entiers de 0.4 mm.

20. Procédé de démultiplexage d'une pluralité de signaux lumineux transportés par une fibre optique comprenant les étapes consistant à :
a. collimater la lumière sortant de l'extrémité d'une fibre optique ;
b. séparer la pluralité de signaux de longueur d'onde en deux faisceaux ;
c. assurer la rotation du sens de polarisation du faisceau polarisé p ou bien du faisceau polarisé s (23) ;
d. étendre le diamètre des faisceaux collimatés dans le sens de la polarisation ;
e. diffracter chacune des faisceaux de longueur d'onde différente en un sens angulaire différent par rapport à un sens déterminé ;
f. réduire le diamètre étendu des faisceaux collimatés dans le sens de la polarisation ;
g. recombiner les deux faisceaux optiques à chaque longueur d'onde en un seul faisceau pour chaque signal de longueur d'onde, et dans lequel le faisceau recombiné pour chaque longueur d'onde a deux composants de polarisation mutuellement perpendiculaires et se propage dans un sens angulaire différent par rapport à un axe optique ;
h. focaliser les signaux de longueurs d'ondes à une position spatiale différente le long d'une ligne dans le plan focal des moyens de focalisation ; et
i. recevoir les signaux focalisés et lancer les signaux individuels à l'intérieur de fibres optiques distinctes via un circuit de sortance optique intégré ayant une pluralité de ports de couplage.

21. Procédé selon la revendication 20, dans lequel la polarisation des deux faisceaux est perpendiculaire aux sillons sur un réseau de diffraction.
